# EUROPÄISCHE PATENTSCHRIFT

(11) **EP 1 256 269 B1**
(45) Veröffentlichungstag und Bekanntmachung des Hinweises auf die Patenterteilung: **20.10.2004**
(21) Anmeldenummer: 02017809.1
(22) Anmeldetag: 30.10.1998
(51) Int. Cl.: A01C 5/06, A01B 23/06, A01C 7/20

(54) **Scheibensäschar**
Seed-drill disc
Disque de semoir

(30) Priorität: 05.11.1997 DE 19748837; 22.04.1998 DE 19818063
(43) Veröffentlichungstag der Anmeldung: 13.11.2002
(62) Teilanmeldung aus: 98120546.1
(73) Patentinhaber: Amazonen-Werke H. Dreyer GmbH & Co. KG, 49205 Hasbergen (DE)
(72) Erfinder: Steenken, Bernd, 49751 Sögel (DE); Steen, Rüdiger, 27798 Hude (DE)
(74) Vertreter: Grünecker, Kinkeldey, Stockmair & Schwanhäusser Anwaltssozietät

(56) Entgegenhaltungen:
- EP-A- 0 686 341
- WO-A-96/24239
- DE-A- 4 310 498
- US-A- 4 760 806
- US-A- 5 562 055

## Beschreibung

Die Erfindung betrifft ein Scheibensäschar gemäß dem Oberbegriff des Patentanspruchs 1.

Ein derartiges Säschar ist aus der WO 96/24339 bekannt.

Ein weiteres Scheibensäschar ist aus der US-PS 4,760,806 bekannt. Diese bekannten Scheibensäschare weisen jeweils eine Scharscheibe zur Schaffung einer Säfurche auf. Des Weiteren ist der Scheibe ein in etwa auf Scheibenhöhe zugeordnetes Tiefenführungselement drehbar gelagert zugeordnet, das mittels einer Einstelleinrichtung gegenüber der jeweiligen Scharscheibe verstellbar ist.

Das in der WO 96/24239 beschriebene Tiefenführungselement weist einen zweiarmigen Hebel auf, an dessen einem Arm das Tiefenführungselement drehgelagert ist. Das Tiefenführungselement und der zweiarmige Hebel sind fest mit dem Scheibensäschar verbunden. In vielen Fällen ist es erwünscht, das Tiefenführungselement abnehmen zu können, um die Scharscheiben ohne Tiefenführungselement einsetzen zu können.

Der Erfindung liegt die Aufgabe zugrunde, ein einfach aufgebautes Scheibensäschar mit einem gut funktionierenden, flexibel einsetzbaren Tiefenführungselement zu schaffen.

Diese Aufgabe wird erfindungsgemäß durch ein Scheibensäschar gemäß Anspruch 1 gelöst.

Die Erfindung gestattet es in überraschend einfacher Weise, das Tiefenführungsmittel mit der Einstelleinrichtung von dem Säschar abzunehmen.

Eine einfache Ausbildung des Schnellverschlusses zur Anordnung des Tiefenführungsmittels mit der Einstelleinrichtung an der Scharhalterung wird durch die Merkmale des Patentanspruches 2 erreicht. Diese Ausbildung des Schnellverschlusses ist einfach und robust.

Eine stabile Lage des Hebels,. an welchem das Tiefenführungsmittel drehbar gelagert ist, gegenüber der Scharhalterung wird durch die Merkmale des Patentanspruches 3 erreicht. Hierdurch wird quasi eine Dreipunktauflage des Hebels an der Scharhalterung erreicht.

Um den Hebel sicher an der Scharhalterung anzuordnen, ist das Merkmal des Patentanspruches 4 vorgesehen. Die Rastnase bildet somit gleichzeitig die Arretierung des Hebels an der Scharhalterung.

Eine besonders vorteilhafte und sichere Anordnung des Tiefenführungsmittels ergibt sich durch das Merkmal des Patentanspruches 5. Hierbei wird die Eigenelastizität des Tiefenführungsmittels ausgenutzt, um die Rastnase des Hebels im Bereich der Rastnase sicher gegen die Scharhalterung zu drücken.

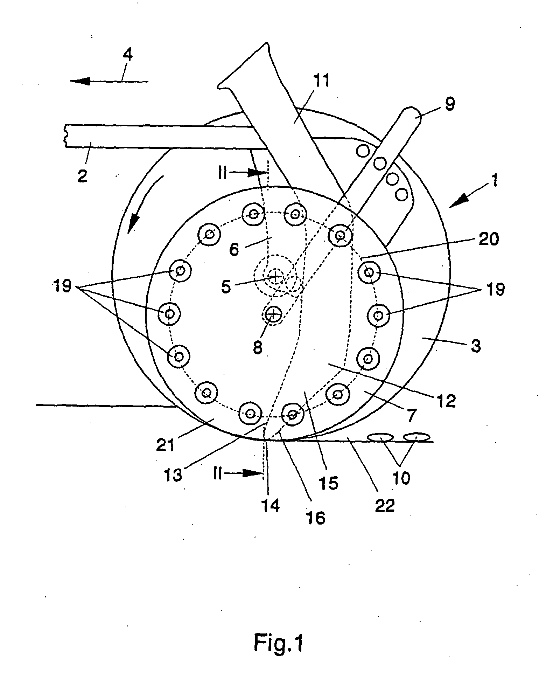

Weitere Einzelheiten der Erfindung sind der Beispielsbeschreibung und den Zeichnungen zu entnehmen. Hierbei zeigen
- Fig.1: das Scheibensäschar in Seitenansicht und in Prinzipdarstellung,

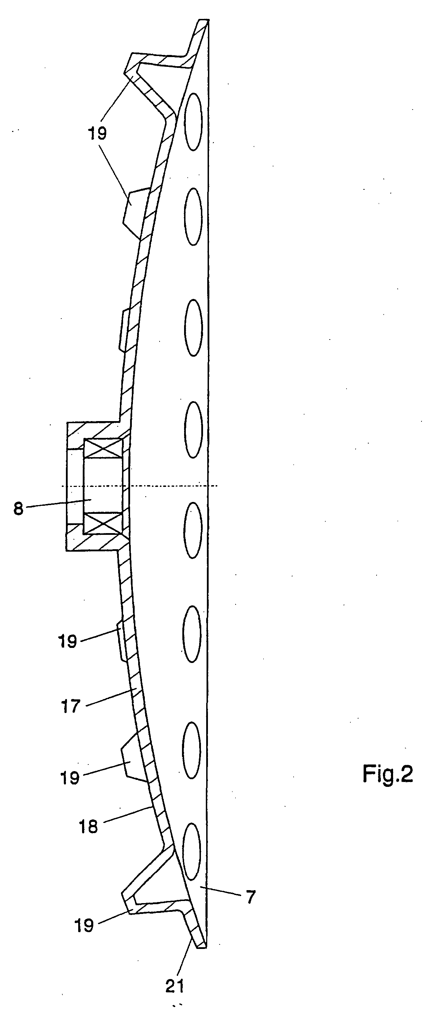

- Fig.2: das Tiefenführungsmittel des Scheibensäschares in der Ansicht II-II,

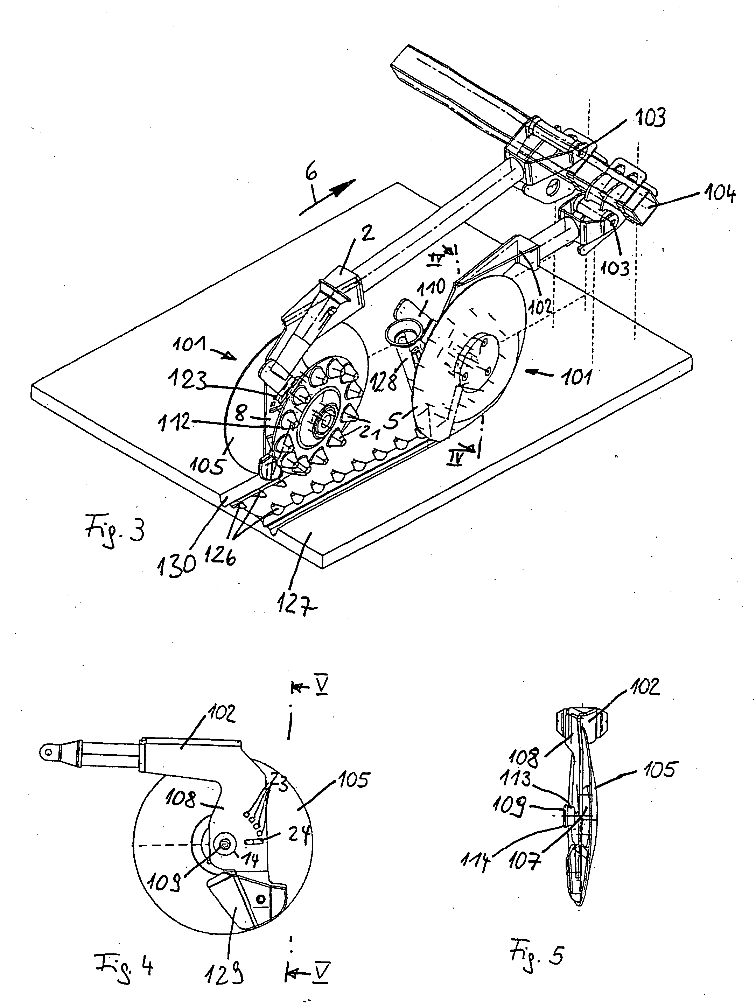

- Fig.3: die Anordnung der Scheibensäschare ausschnittsweise an einem Scharbalken in perspektivischer Darstellung,
- Fig.4: das Scheibensäschar nach Abnahme des Tiefenführungselementes in der Ansicht IV-IV,
- Fig.5: das Scheibensäschar in der Ansicht V-V,

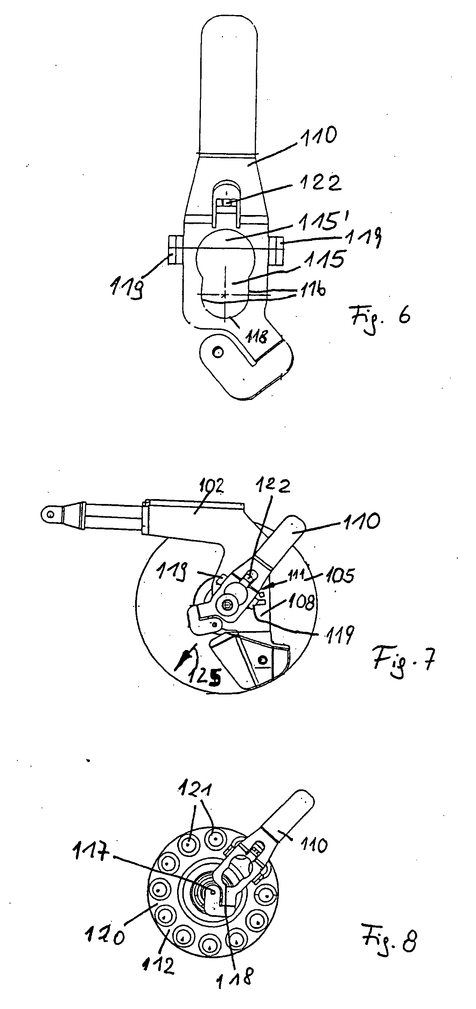

- Fig.6: den Einstellhebel in Seitenansicht und vergrößertem Maßstab,
- Fig.7: das Scheibensäschar mit dem auf dem Schwenkbolzen angeordneten Hebel, jedoch ohne Anordnung des Tiefenführungsmittels an dem Einstellhebel und
- Fig.8: den Einstellhebel mit dem Tiefenführungselement.

Das Scheibensäschar 1 ist mittels einer Scharhalterung 2 in aufrechter Ebene bewegbar an dem nicht dargestellten Rahmen einer Sämaschine angeordnet. Das Scheibensäschar 1 weist eine Scharscheibe 3, die jeweils winkelig gegenüber der Vertikalen und zur Fahrtrichtung 4 schräg angestellt ist, auf. Die Scharscheibe 3 ist mittels eines Drehlagers 5 an der Halterung 6 der Scharhalterung 2 drehbar gelagert. Desweiteren ist der Scheibe 3, in Fahrtrichtung 4 gesehen, etwa auf Scheibenhöhe ein Tiefenführungsmittel 7 zugeordnet. Zwischen der Halterung 6 der Scharhalterung 2 und der Lagerung 8 des Tiefenführungsmittels 7 ist eine Einstelleinrichtung 9 angeordnet, mittels welcher die Höhenlage des Tiefenführungsmittels 7 zur Scharscheibe 3 veränderbar ist, so daß die Säfurchentiefen und somit unterschiedliche Ablagetiefen für das Saatgut 10 erreichbar sind.

Desweiteren ist dem Scheibensäschar 1 eine Saatleitung 11 zugeordnet, die an ihren Saatleitungsende 12 mit einem Scharkörper 13 verbunden ist. Der Scharkörper 13 liegt dicht, jedoch mit einem kleinen Spalt an der Scheibe 3 an und reicht bis zum Scheibenumfang 14 der Scharscheibe 3. Der Scharkörper 13 ist zwischen der Scharscheibe 3 und dem Tiefenführungsmittel 7 angeordnet. Der Scharkörper 13 weist an seinem unteren Ende 15 auf seiner Rückseite die Saatgutabgabeöffnung 16 auf. Der Scharkörper 13 ist als Furchenformungselement ausgebildet.

Das Tiefenführungsmittel 7 weist einen Tragkörper 17 auf, der als scheibenartiges Element ausgebildet ist. An der seitlichen Außenseite 18 des scheibenartigen Elementes 17 sind etwa senkrecht zur Fläche des scheibenartigen Elementes 17 abstehende Stifte oder Noppen 19 angeordnet. Die Noppen 19 sind mit Abstand zueinander angeordnet und bilden eine unterbrochene Lauffläche für das Tiefenführungsmittel 7, so daß sich quasi eine Tiefenführungsrolle mit unterbrochener Lauffläche ergibt. Die Noppen 19 rollen auf dem Boden ab, so daß sich eine gute und gleichmäßige Tiefenführung für die Scharscheibe 3 und den Scharkörper 13 und somit für das gesamte Säschar 1 ergibt.
Die Noppen 19 sind kegel- bzw. kegelstumpfförmig und als Hohlkörper ausgebildet. Weiterhin sind die Noppen 19 im Ausführungsbeispiel nach innen offen, also zur Scharscheibe 3 hin offen.

Der Tragkörper 17 ragt in radialer Richtung über die Noppen 19, die auf einen Kreis 20 angeordnet sind, hinaus.. Dieser die Noppen 19 überragende Ring 21 ragt zumindest teilweise bis in die von der Scharscheibe 3 geschaffene Scharfurche 22 und hält sie zumindest teilweise offen.

Der als Furchenformungselement ausgebildete Scharkörper 13 reicht bis in die von der Scharscheibe 3 geschaffenen Säfurche 22. Somit wird eine saubere und gleichmäßige Säfurche 22 erreicht, so daß über die Saatgutabgabeöffnung 16 das Saatgut in der von der Scharscheibe 3 und dem Scharkörper 13 geschaffenen Säfurche 22 abgelegt werden kann. Hinter der Scharscheibe 3 können nicht dargestellte Zustreicher bekannter Bauart zum Schließen der Säfurche 20 und zur Bedeckung des in der Säfurche 22 abgelegten Saatgutes angeordnet sein.

Das Tiefenführungsmittel 7 mit dem Tragkörper 18 und den Noppen 19 ist aus einem begrenzt flexiblen Material hergestellt, damit anhaftende und ahbackende Boden- und Pflanzengemische im Zuge der Selbstreinigung sich vom Tiefenführungsmittel 7 lösen und abfallen. Durch die Ausbildung der Noppen 19 al nach innen offene Hohlkörper wird einerseits eine ausreichende Stabilität.für die Tiefenführung des Säschares 1 und andererseits..eine ausreichende Flexibilität für die Selbstreinigung gewährleistet.

Das Scheibensäschar 101 ist über die Scharhalterung 102 in aufrechter Ebene bewegbar mittels des Gelenkes 103 an dem Scharbalken 104 angeordnet. Das Scheibensäschar 101 weist eine Scharscheibe 105, die jeweils winkelig gegenüber der Vertikalen und zur Fahrtrichtung 106 schräg angestellt ist, auf. Die Scharscheibe 105 ist mittels eines Drehlagers 107 an der Halterung 108 der Scharhalterung 102 drehbar gelagert. Desweiteren ist an der Halterung 108 ein Bolzen 109 angeordnet. Auf diesem Bolzen 109 ist mittels des zweiarmigen Hebels 110 einer Einstelleinrichtung 111 das Tiefenführungsmittel 112, welches als Tiefenführungsrad ausgebildet ist, angeordnet.

Der Bolzen 109 weist eine umlaufende Nut 113 auf, so daß sich ein Ansatz 114 ergibt. Der Hebel 110 weist eine Aussparung 115 auf, die mit ihren beiden Seiten 116 und ihrer dem Drehlager 117 zugewandten Seite 118 in die Nut 113 faßt. Die Aussparung 115 weist auf der dem Drehlager 117 des Tiefenführungsmittels 112 abgewandten Seite einen Bereich 115' mit zumindest der Größe des Außendurchmessers und/oder die Kontur des Bolzens 109, d.h. die Größe des Ansatzes 114 auf der Außenseite der Nut 113 auf.

An dem Hebel 110 sind im Abstand zu dem Bereich der Aussparung 115 zwei an die Scharhalterung 102 anliegende Auflageelemente 119 angeordnet, die bei der Anordnung des Hebels 110 auf dem Bolzen 109 an der Halterung 108 zur Antage kommen. Diese beiden Auflageelemente 119 bilden zusammen mit dem Bereich 116 und 118 des Hebels 108, der in der Nut 113 des Bolzens 109 angeordnet ist, eine Dreipunktauflage, so daß eine unverkippbare Lage des Hebels 110 bei der Anordnung auf dem Bolzen 109 gegeben ist.

An dem Hebel 110 ist mittels eines Drehlagers 117 das als Tiefenführungsrad 120 mit unterbrochenen Laufflächen 121, die als Noppen ausgebildet sind, ausgebildete Tiefenführungsrad 112 angeordnet. An dem Hebel 110 ist die vorstehende Rastnase 122 angeordnet, welches als Einstellmittel ausgebildet ist. Diese Rastnase 122 greift in die an der Halterung 108 angeordneten Aussparungen 123 bzw. Durchbrüche ein, so daß unterschiedliche Stellungen des Tiefenführungsmittels 112 zu der Scharscheibe 105 einstellbar sind. Das Tiefenführungsmittel 112 weist eine derartige Elastizität auf, daß der Arm des Hebels 110, an dem die Einstelleinrichtung 111 angeordnet ist, gegen die Halterung 108 gedrückt wird, so daß die Rastnase 122 in jedem Falle sicher in den Durchbruch 123 faßt. Die Durchbrüche 123 sind derart angeordnet und ausgebildet, daß, wenn die Rastnase 122 in diese Durchbrüche 123 faßt, gleichzeitig diese Rastnase 122 als Arretierung des Hebels 108 auf dem Schwenkbolzen 109 dient.

Wenn die Rastnase 122 aus den Durchbrüchen 123 abgehoben ist oder die Rastnase 122 in den Längsschlitz 124, der sich in der Halterung 108 befindet, eingerastet ist, läßt sich der Hebel 110 in Pfeilrichtung 125 verschieben, so daß der größere Teil der Aussparung 115 mit dem größten Durchmesser des Bolzens.109 zur Deckung gebracht wird. In dieser Position kann der Hebel mit dem Tiefenführungsmittel 112 von dem Schwenkbolzen 109 abgenommen werden. In umgekehrter Weise läßt sich der Hebel 110 mit dem Tiefenführungsmittel 112 auf dem Schwenkbolzen 109 anordnen.

Der Hebel 110 ist in Verbindung mit dem Schwenkbolzen 109 und der Scharhalterung 102 derart ausgebildet, daß das Tiefenführungsmittel 112 gegen die Scharscheibe 105 gedrückt wird. Aufgrund der Verzahnung der an dem Tiefenführungsmittel 112 angeordneten Noppen 121, die die unterbrochene Lauffläche des Tiefenführungsrades 112 bilden, erfolgt eine Verzahnung 126 mit dem Boden 127. Hierdurch wird ein sicherer Antrieb und eine sichere Drehung der Scharscheibe 105 auch bei schwierigen Einsatzverhältnissen gewährleistet.

An der Scharhalterung102 ist die Saatgutzuführungsleitung 128 ausmündend angeordnet. Am unteren Ende der Leitung 128 ist das Furchenformungselement 129 an der Halterung 108 der Scharhalterung 102 angeordnet, um eine gute Ablage des Saatgutes in der von der Scharscheibe 105 gezogenen Furche 130 zu gewährleisten.

Aufgrund des Vorhandenseins des Furchenformungselementes 129 läßt sich das Scheibenschar auch ohne Tiefenführungsmittel 112 einsetzen.

## Patentansprüche

1. Scheibensäschar mit einer Scharhalterung (102), an der zumindest eine Scharscheibe (105) jeweils winklig gegenüber der Vertikalen und zur Fahrtrichtung schräg gestellt sowie ein der Scheibe (105), in Fahrtrichtung gesehen, etwa in Scheibenebene zugeordnetes, mittels einer Einstelleinrichtung (111) gegenüber der Scharscheibe (105) in Höhenrichtung verstellbares, drehbar gelagertes Tiefenführungsmittel (112) angeordnet ist, wobei die Einstelleinrichtung (111) einen zweiarmigen Hebel (110) aufweist, an dessen einem Arm das Tiefenführungsmittel (112) gelagert ist, **dadurch gekennzeichnet, dass** an dem anderen Arm des Hebels (110) ein Einstellmittel (122) angeordnet ist, welches mit an der Scharhalterung (102) angeordneten Einstellelementen (123) der Einstelleinrichtung (111) zusammenwirkt und dass der Hebel (110) auf einem an der Scharhalterung (102) befestigten Bolzen (109) schwenkbar und abnehmbar angeordnet ist.

2. Scheibensäschar nach Anspruch 1, **dadurch gekennzeichnet, dass** der Bolzen (109) eine umlaufende Nut (113) aufweist, dass der Hebel (110) eine Aussparung (15) aufweist, die mit ihren beiden Seiten (116), und ihrer dem Drehlager (117) zugewandten Seite (118) in die Nut (113) fasst, und dass die Aussparung (115) auf der dem Drehlager (117) des Tiefenführungsmittels (112) abgewandten Seite (115') zumindest die Größe des Außendurchmessers und/oder die Kontur des Bolzens (109) aufweist.

3. Scheibensäschar nach Anspruch 2, **dadurch gekennzeichnet, dass** an dem Hebel (110) im Abstand zu dem kleineren Bereich der Aussparung (115) zwei an die Scharhalterung (108) anliegende Auflageelemente (119) angeordnet sind.

4. Scheibensäschar nach einem oder mehreren der vorstehenden Ansprüche, **dadurch gekennzeichnet, dass** das an dem Hebel (110) angeordnete Einstellmittel (122) als von dem Hebel (110) vorspringende Rastnase ausgebildet ist, die mit in der Scharhalterung (108) angeordneten Aussparungen bzw. Durchbrüchen (123) in Eingriff bringbar ist.

5. Scheibensäschar nach einem oder mehreren der vorstehenden Ansprüche, **dadurch gekennzeichnet, dass** das Tiefenführungsmittel (112) eine derartige Elastizität aufweist, dass der Arm des Hebels (110), an dem die Einstelleinrichtung (111) angeordnet ist, gegen die Scharhalterung (108) drückbar ist.

## Claims

1. Disc sowing coulter, having a coulter holder (102) on which at least one coulter disc (105) is disposed so as to be respectively at an angle to the vertical and inclined relative to the direction of travel, and on which holder a rotatably mounted depth control means (112) is disposed, which is associated with the disc (105) substantially in the disc plane when viewed with respect to the direction of travel, said means being displaceable relative to the coulter disc (105) in the vertical direction by means of an adjusting apparatus (111), the adjusting apparatus (111) having a two-armed lever (110), on one arm of which is mounted the depth control means (112), **characterised in that** an adjusting means (122) is disposed on the other arm of the lever (110), which adjusting means co-operates with adjusting elements (123) of the adjusting apparatus (111) disposed on the coulter holder (102), and **in that** the lever (110) is disposed on a bolt (109), mounted on the coulter holder (102), so as to be pivotable and removable.

2. Disc sowing coulter according to claim 1, **characterised in that** the bolt (109) has an encircling groove (113), **in that** the lever (110) has a recess (15) which fits into the groove (113) with its two sides (116) and its side (118) facing the rotary bearing (117), and **in that** the recess (115) has, on the side (115') remote from the rotary bearing (117) of the depth control means (112), at least the size of the external diameter and/or the contour of the bolt (109).

3. Disc sowing coulter according to claim 2, **characterised in that** two bearing elements (119), which abut against the coulter holder (108), are disposed on the lever (110) at a spacing from the smaller region of the recess (115).

4. Disc sowing coulter according to one or more of the preceding claims, **characterised in that** the setting means (122), which is disposed on the lever (110), is in the form of a detent, which protrudes from the lever (110) and can be brought into engagement with recesses or respectively openings (123) provided in the coulter holder (108).

5. Disc sowing coulter according to one or more of the preceding claims, **characterised in that** the depth control means (112) has such a degree of elasticity that the arm of the lever (110), on which the adjusting apparatus (111) is disposed, is urgeable towards the coulter holder (108).

## Revendications

1. Soc à disques de semoir comprenant un support de soc (102) portant au moins un disque de soc (105) incliné à la fois par rapport à la direction verticale et par rapport à la direction de déplacement, avec, vu dans la direction de déplacement, associé au disque et sensiblement dans le plan de celui-ci, un moyen de guidage en profondeur (112), monté en rotation et réglable en hauteur par rapport au disque (105) au moyen d'un dispositif de réglage (111) présentant un levier à deux bras (110) sur l'un desquels est monté le moyen de guidage en profondeur (112),
**caractérisé en ce que**
sur l'autre bras du levier (110) est monté un moyen de réglage (122) qui coopère avec des éléments de réglage (123) du dispositif (111) montés sur le support de soc (102), le levier (110) étant monté pivotant et amovible sur un pivot (109) fixé au support de soc (102).

2. Soc à disques de semoir selon la revendication 1,
**caractérisé en ce que**
le pivot (109) présente une gorge périphérique (113), le levier (110) présente un évidement (115) qui par ses deux côtés (116) et par son côté (118) tourné vers le palier de rotation (117) est engagé dans la gorge (113), et l'évidement (115) sur son côté (115') éloigné du palier de rotation (117), du moyen de guidage en profondeur (112), présente au moins la dimension du diamètre externe et/ou du contour du pivot (109).

3. Soc à disques de semoir selon la revendication 2,
**caractérisé en ce que**
sur le levier (110) à une certaine distance de la plus petite zone de l'évidement (115) se trouvent deux éléments d'appui (119) en contact avec le support de soc (108).

4. Soc à disques de semoir selon une ou plusieurs revendications précédentes,
**caractérisé en ce que**
le moyen de réglage (122) situé sur le levier (110) est constitué par une dent d'arrêt en saillie issue du levier (110) et qui peut être amenée en prise avec des évidements ou des passages (123) prévus dans le support de soc (108).

5. Soc à disques de semoir selon une ou plusieurs revendications précédentes,
**caractérisé en ce que**
le moyen de guidage en profondeur (112) présente une élasticité telle que le bras du levier (110) sur lequel est monté le dispositif de réglage (111) peut être poussé contre le support de soc (108).
